(19) Europäisches Patentamt
European Patent Office
Office européen des brevets

(11) **EP 4 071 110 A1**

(12) **EUROPEAN PATENT APPLICATION**
published in accordance with Art. 153(4) EPC

(43) Date of publication:
**12.10.2022 Bulletin 2022/41**

(21) Application number: **20895498.2**

(22) Date of filing: **02.12.2020**

(51) International Patent Classification (IPC):
**C01B 21/06** (2006.01)     **C01B 21/064** (2006.01)
**C01B 21/068** (2006.01)     **C01B 21/072** (2006.01)

(52) Cooperative Patent Classification (CPC):
**C01B 21/06; C01B 21/064; C01B 21/068;
C01B 21/072**

(86) International application number:
**PCT/JP2020/044936**

(87) International publication number:
**WO 2021/112145 (10.06.2021 Gazette 2021/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.12.2019 JP 2019220570**

(71) Applicant: **Tokuyama Corporation
Shunan-shi, Yamaguchi 745-8648 (JP)**

(72) Inventors:
• **WAKAMATSU, Satoru
Shunan-shi, Yamaguchi 745-8648 (JP)**
• **AKIMOTO, Koji
Shunan-shi, Yamaguchi 745-8648 (JP)**

(74) Representative: **Beckmann, Claus
Kraus & Weisert
Patentanwälte PartGmbB
Thomas-Wimmer-Ring 15
80539 München (DE)**

(54) **METAL NITRIDE PRODCUTION METHOD**

(57)     The present invention relates to a method for producing a metal nitride, which is a method for synthesizing a metal nitride by igniting a raw material powder containing a metal powder housed in a reaction vessel (2) under a nitrogen atmosphere and propagating nitriding combustion heat of the metal powder to the whole of the housed raw material powder, characterized in that the raw material powder is housed in the reaction vessel (2) as a molded body (IB) having a void ratio of 40 to 70%. According to the present invention, it is possible to provide a method for producing a metal nitride capable of suppressing the occurrence of powder scattering and improving the recovery rate of the metal nitride.

Fig. 2

**EP 4 071 110 A1**

**Description**

Technical Field

The present invention relates to a method for producing a metal nitride.

Background Art

Metal nitrides such as silicon nitride, aluminum nitride, and boron nitride have attracted attention as ceramic raw materials for various industrial materials because sintered bodies thereof generally have excellent properties such as high thermal conductivity, high insulating properties, and high strength.

Among various ceramic sintered bodies, a silicon nitride sintered body obtained by adding various sintering aids to a silicon nitride powder and sintering the silicon nitride powder at a high temperature has characteristics such as light weight, high mechanical strength, high chemical resistance, and high electrical insulation, and is used as a wear-resistant member such as a ball bearing or a member for a high-temperature structure. In addition, since the thermal conductivity can be increased by devising the kind of the sintering aids and the sintering conditions, it has come to be used as a thin substrate material for heat dissipation having high strength.

As a method for producing a silicon nitride powder, a method of synthesizing silicon nitride by a direct nitriding method using a self-propagating high temperature synthesis (SHS method) is known as a conventional technique (for example, see PTL 1, Examples 3 and 4). In the self-propagating high temperature synthesis, a silicon powder is used as a raw material, a part of the raw material powder is ignited by strong heat under a nitrogen atmosphere, and a synthesis reaction is performed by self-heating of the raw material compound.

In Example 3 of PTL 1, purity of starting materials and detailed production conditions are not described, but it is described that a carbon crucible filled with a silicon powder having an average particle diameter of 20 pm was placed in a reaction vessel, the silicon powder was irradiated with a YAG laser at an output of 20W under a nitrogen atmosphere of 5 atm to ignite the silicon powder, and then the laser irradiation was stopped, and a combustion synthesis reaction was carried out by self-heating thereafter to obtain a fine powder product.

In addition, in Example 4 of PTL 1, although the purity of starting materials and detailed production conditions are not described, it is described that a carbon crucible filled with a silicon powder having an average particle diameter of 5 pm was placed in a reaction vessel, the silicon powder was irradiated with a YAG laser at an output of 100 W under a nitrogen atmosphere of 30 atm to ignite the silicon powder, and then the laser irradiation was stopped, and a combustion synthesis reaction was carried out by self-heating thereafter to obtain a fine powder product.

The method for producing silicon nitride by the direct nitriding method utilizing self-heating is extremely advantageous in terms of thermal energy, but in the method of PTL 1, since the nitriding reaction pressure is too high, the nitriding reaction is linked violently, and fine particles of the produced silicon nitride are fused, resulting in less production of fine particles essential for obtaining a dense sintered body. Therefore, in the silicon nitride powder obtained by this method, it is difficult to obtain a dense sintered body, and the problem that the shrinkage ratio during sintering is large is not improved.

Further, in the case where the combustion synthesis reaction is carried out by self-heating by igniting the silicon powder as described above, since the raw material silicon powder is heated at once and the reaction proceeds, there is a concern that melting and fusion of silicon may occur during the reaction. For this reason, PTL 2 proposes that the raw material silicon powder is mixed with a silicon nitride powder as a diluent in an amount of 10% by mass or more, and the bulk density of a powder layer (raw material powder layer) composed of the mixture of the silicon powder and the diluent is adjusted to 0.3 to 0.65 g/cm³ to perform combustion synthesis. By using such a diluent, the combustion reaction proceeds mildly, melting and fusion of silicon are prevented, and by adjusting the bulk density of the raw material powder layer to be low to a certain extent, hard aggregation of the obtained massive silicon nitride is prevented and pulverization is facilitated.

Citation List

Patent Literature

PTL 1:JP 2000-264608 A
PTL 2: WO2018/110565

2

Summary of Invention

Technical Problem

However, in the conventional method for producing a silicon nitride powder, when the raw material powder is filled in the reaction vessel, there is a case in which the working environment is deteriorated due to the occurrence of powder scattering. In addition, when the inside of the reaction vessel is replaced with nitrogen gas from air after the reaction vessel is installed in a reaction device, the filling of the raw material powder is promoted due to a change in pressure inside the reaction device, and accordingly, cracks may occur in the filled raw material powder. When cracking occurs in the filled raw material powder, the propagation of the nitriding combustion heat becomes unstable, and there is a possibility that unreacted raw material remains in the cracked portion. If the unreacted raw material remains in the cracked portion, when the unreacted raw material is removed by brushing or the like, a large amount of the produced metal nitride is also removed, and as a result, the recovery rate of the metal nitride decreases.

Therefore, an object of the present invention is to produce a metal nitride capable of suppressing the occurrence of powder scattering and improving the recovery rate of the metal nitride.

Solution to Problem

The present inventors have conducted many experiments and studied a method for producing a silicon nitride powder by a direct nitriding method using self-propagating high temperature synthesis (hereinafter also referred to as a combustion synthesis method). As a result, the present inventors have found new knowledge that by producing a metal nitride using a molded body obtained by molding a raw material powder, it is possible to suppress the occurrence of powder scattering and improve the recovery rate of the metal nitride by suppressing cracking of the raw material powder, thereby completing the present invention.

As described in PTL 2 and the like described above, it was common to perform combustion synthesis while reducing the bulk density of the raw material powder to a certain extent. According to such common general knowledge, there are concerns that if the bulk density is increased by molding the raw material powder, the heat of combustion produced by the combustion synthesis method becomes difficult to propagate, and that the formed massive silicon nitride becomes unpulverizable. However, contrary to expectations, it has been found that by using a specific molded body made from the raw material powder of the present invention, it is possible to produce a metal nitride by the combustion synthesis method and suppress the occurrence of powder scattering because the molded body is used.

That is, according to the present invention, there is provided a method for producing a metal nitride by igniting a raw material powder containing a metal powder housed in a reaction vessel under a nitrogen atmosphere and propagating nitriding combustion heat of the metal powder to the whole of the housed raw material powder to synthesize the metal nitride, the method including housing the raw material powder in the reaction vessel as a molded body having a void ratio of 40 to 70%.

In the production method of the present invention, the following aspects can be suitably employed.

(1) The raw material powder contains 0 to 80 parts by mass of a metal nitride powder with respect to 100 parts by mass of the metal powder.
(2) A plurality of molded bodies of the raw material powder are brought into contact with each other and housed in the reaction vessel.
(3) A heat insulating layer having nitrogen permeability and made of a material inert to a nitriding reaction is formed in close contact with an upper surface of the molded body of the raw material powder housed in the reaction vessel.
(4) The metal is silicon.

Advantageous Effects of Invention

According to the present invention, it is possible to provide a method for producing a metal nitride capable of suppressing the occurrence of powder scattering and improving the recovery rate of the metal nitride.

Brief Description of Drawings

Fig. 1 is a schematic view showing an example of the arrangement of a molded body in a reaction vessel.
Fig. 2 is a schematic view showing an example of the arrangement of molded bodies in a reaction vessel.
Figs. 3 (a) to 3 (c) are schematic views each showing an example of the arrangement of molded bodies in a reaction vessel.

Fig. 4 is a schematic view showing an example of the arrangement of molded bodies in a reaction vessel.

Fig. 5 is a schematic view showing an example of the heat insulating layer formed above the molded bodies.

Fig. 6 is a schematic view showing an example of the heat insulating layer formed on the upper side, the lower side, and the lateral side of the molded bodies.

Description of Embodiments

The method for producing a metal nitride according to the present invention is a method for producing a metal nitride in which a raw material powder containing a metal powder housed in a reaction vessel is ignited under a nitrogen atmosphere, and the nitriding combustion heat of the metal powder is propagated to the whole of the housed raw material powder to synthesize a metal nitride. The method for producing a metal nitride according to the present invention is characterized in that the raw material powder is housed in a reaction vessel as a molded body having a void ratio of 40 to 70%. This makes it possible to suppress the occurrence of powder scattering and to improve the recovery rate of the metal nitride. Hereinafter, this production method will be described in detail.

(Raw Material Powder)

In the present invention, the raw material powder includes a metal powder. Examples of the metal powder include a silicon powder, an aluminum powder, and a boron powder. Although silicon and boron are non-metal elements, since a simple substance of silicon may be referred to as metal silicon and a simple substance of boron may be referred to as metal boron, a silicon powder and a boron powder are also included in the metal powder in the description herein. A silicon powder is particularly suitable for the present invention.

The metal powder contained in the raw material powder preferably has an average particle diameter $D_{50}$ in a range of 1 to 10 pm in order to obtain a molded body having a void ratio of 40 to 70%. The average particle diameter $D_{50}$ refers to a particle diameter when the cumulative volume in the particle size distribution measured by a laser diffraction scattering method is 50%.

Further, in relation to the above, the metal powder used as the raw material powder is preferably a high-purity metal powder. For example, when the metal powder is a silicon powder, the contents of Al and Fe are preferably 200 ppm or less, respectively. Further, when the metal powder is an aluminum powder, the contents of Si and Fe are preferably 200 ppm or less, respectively. Furthermore, when the metal powder is a boron powder, the content of Fe is preferably 200 ppm or less. When such a metal element is present, the sinterability of the obtained metal nitride may decrease, and the characteristics such as the strength of the obtained sintered body may decrease. For the same reason, it is preferable that the content of high melting point metals such as W and Mo is 200 ppm or less.

The surface of the metal powder is preferably oxidized to an appropriate degree. This is because the oxide film formed on the surface of the metal powder is an important factor for appropriately controlling the progress of the combustion synthesis reaction. As a method for oxidizing the surface of the metal powder to an appropriate degree, a method of pulverizing the metal powder to the above-described particle size range in air is conveniently employed. For example, a jet mill using air is preferably employed. The degree of oxidation of the metal powder may be appropriately determined within a range that does not inhibit the combustion synthesis reaction of the present invention, but oxygen is preferably contained in an amount of about 0.1 to 1% by mass with respect to the weight of the metal powder. When the amount of oxygen in the metal powder is less than the above range, the combustion temperature tends to be excessively high during the nitriding reaction, and when the amount of oxygen is more than the above range, the nitriding reaction tends to be suppressed, which may cause problems such as ignition failure and residual unreacted metal.

In the present invention, the above-described metal powder used as the raw material powder may be obtained in any manner, but it is preferable that the purity and the particle diameter are adjusted to the above-described predetermined ranges. For example, when the metal powder is a silicon powder, it is generally economical to recover and use fine powder produced in the process of crushing a semiconductor polycrystalline silicon rod to produce a nugget. In addition, commercially available industrial raw materials may be pulverized and used.

The raw material powder may contain a diluent. Since the reaction between the metal powder and nitrogen is an exothermic reaction and the surface reaction is a rate-controlling reaction, it becomes more difficult to control the temperature of the raw material powder as the amount of the metal powder increases. However, since the raw material powder contains the diluent, the content of the metal powder in the raw material powder is reduced, and the heat generation of the raw material powder is also reduced. Therefore, it is easy to control the temperature of the raw material powder.

As the diluent, a metal nitride powder is preferably used, and in particular, the metal nitride powder used as the diluent is preferably a nitride powder of the same metal element as the metal powder of the raw material so that the diluent contained in the raw material powder may not be removed from the produced metal nitride after the metal powder has reacted to produce the metal nitride. For example, when the metal powder is a silicon powder, the metal nitride powder used as the diluent is preferably silicon nitride; when the metal powder is an aluminum powder, the metal nitride powder used as the diluent is preferably aluminum nitride; and when the metal powder is a boron powder, the metal nitride powder used as the diluent is preferably boron nitride. As the diluent, for example, a metal nitride produced by the method for producing a metal nitride of the present invention can be used.

The raw material powder preferably contains 0 to 80 parts by mass of a metal nitride with respect to 100 parts by mass of the metal powder. That is, the raw material powder may or may not contain the metal nitride. When the raw material powder contains a metal nitride, the content of the metal nitride is preferably 80 parts by mass or less with respect to 100 parts by mass of the metal powder. When the content of the metal nitride is 80 parts by mass or less with respect to 100 parts by mass of the metal powder, the molded body can be easily ignited under a nitrogen atmosphere, and the nitriding combustion heat of the metal can be easily propagated to whole of the molded bodies housed in the reaction vessel. From such a viewpoint, the content of the metal nitride is more preferably 50 parts by mass or less, and still more preferably 30 parts by mass or less with respect to 100 parts by mass of the metal powder. In addition, from the viewpoint of controlling the temperature of the raw material powder, the content of the metal nitride is more preferably 1 part by mass or more, and still more preferably 5 parts by mass or more with respect to 100 parts by mass of the metal powder.

The raw material powder may contain other components in addition to the metal powder and the diluent used as necessary as long as the effects of the present invention are not impaired. Examples of the other components include chlorides such as sodium chloride and ammonium chloride, and oxides such as calcium oxide, yttrium oxide, and magnesium oxide. The content of the other components is preferably 10% by mass or less, more preferably 5% by mass or less, still more preferably 1% by mass or less, and even more preferably 0% by mass based on the total amount of the raw material powder.

(Molded Body)

The void ratio of the molded body is 40% to 70%. When the void ratio of the molded body is less than 40%, permeation of nitrogen gas into the molded body may be insufficient. In this case, the combustion reaction does not proceed sufficiently, and a misfire or the like occurs in the middle of the reaction, resulting in an increase in unreacted materials and a decrease in yield. When the void ratio of the molded body is more than 70%, the strength of the molded body necessary for handling the molded body may not be secured. From these viewpoints, the void ratio of the molded body is preferably 48 to 68%, and more preferably 50 to 65%. Conventionally, it has been considered that the combustion reaction does not sufficiently proceed when the raw material powder is molded into a molded body. However, as a result of intensive studies by the present inventors, it has been found that the combustion reaction sufficiently proceeds even in the case of a molded body by setting the void ratio of the molded body to 40% or more. The void ratio of the molded body can be controlled by adjusting the average particle diameter of the raw material powder, the molding pressure during molding, and the like.

When a plurality of molded bodies are housed in the reaction vessel, the average value of the void ratios of the plurality of molded bodies is defined as the void ratio of the molded body in the present invention. Here, the average value of the void ratios of the plurality of molded bodies is a weighted average value calculated from the void ratio of each molded body and the weight of each molded body.

Therefore, when a plurality of molded bodies are used, the void ratio of some molded bodies may be less than 40% or more than 70%, but the void ratio of each molded body in the plurality of molded bodies is preferably 40 to 70%, more preferably 48 to 68%, and still more preferably 50 to 65%.

The void ratio of the molded body can be calculated as follows from the density of the molded body in the absence of voids (theoretical density of the molded body: D2) and the measured value of the density of the molded body (density of the molded body: D1). In detail, it is measured by the method described in Examples. The theoretical density of the molded body can be determined from the density and component ratio of each raw material constituting the molded body.

$$\text{Void ratio } (\%) = (1 - D1/D2) \times 100$$

The bulk density of the molded body is preferably 0.85 to 1.30 g/cm$^3$. When the bulk density of the molded body is 0.85 g/cm$^3$ or more, the strength of the molded body necessary for handling the molded body can be secured. When the bulk density of the molded body is 1.30 g/cm$^3$ or less, nitrogen gas can be sufficiently permeated into the molded body. Thus, the nitriding combustion reaction can be sufficiently advanced. From such a viewpoint, the bulk density of the molded body is more preferably 0.90 to 1.20 g/cm$^3$, and still more preferably 0.95 to 1.15 g/cm$^3$.

The shape of the molded body is not particularly limited. Examples of the shape of the molded body include a plate shape, a rectangular parallelepiped shape, a cubic shape, a cylindrical shape, a prismatic shape, a spherical shape, and an ellipsoidal shape. The molded body to be housed in the reaction vessel may be a single molded body or a plurality of molded bodies. In the case where a plurality of molded bodies are housed in the reaction vessel, the molded bodies preferably have a shape that allows the molded bodies to come into contact with each other, and preferably have a shape that allows the molded bodies to come into surface contact with each other. As a result, the nitriding combustion heat can be easily propagated between the molded bodies. From such a viewpoint, the shape of the molded body is preferably a cylindrical shape, a prismatic shape, or the like, and among these, a cylindrical shape is more preferable in consideration of ease of molding or the like.

The molding method of the raw material powder is not particularly limited as long as a molded body of the raw material powder can be produced. However, in order to suppress mixing of oxygen impurities into the raw material powder, it is preferable to mold the raw material powder by dry molding. For example, the raw material powder may be molded by a uniaxial pressing method. In this case, the raw material powder can be molded using, for example, an automatic dry press molding machine. Alternatively, the raw material powder may be molded by compression granulation such as briquetting or tableting.

(Housing of Molded Body in Reaction Vessel)

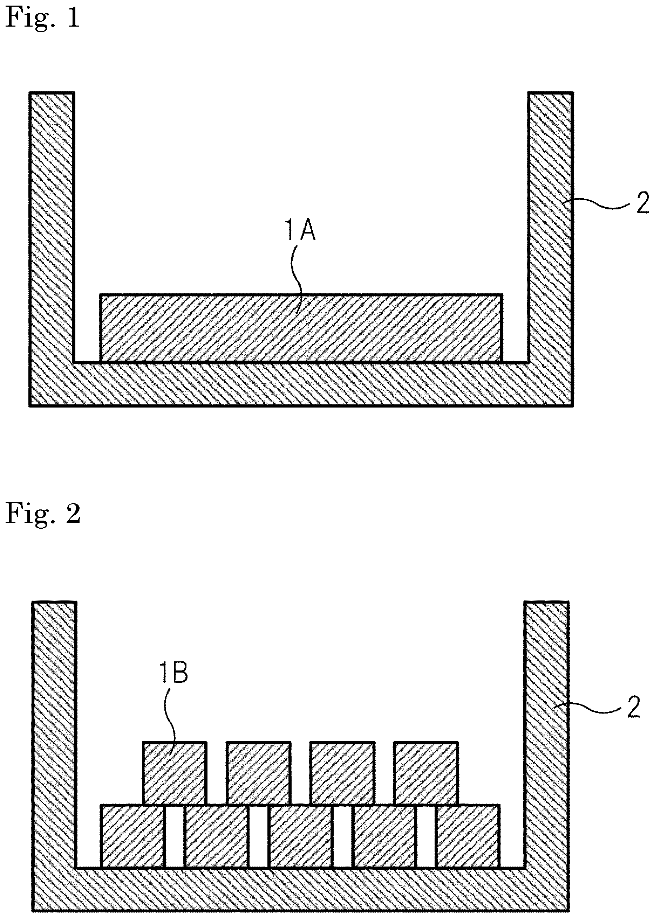

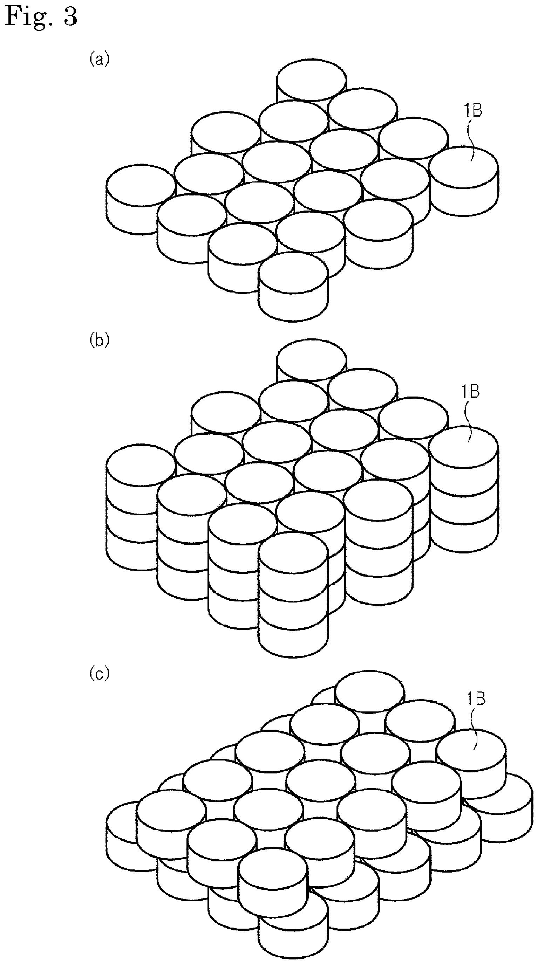

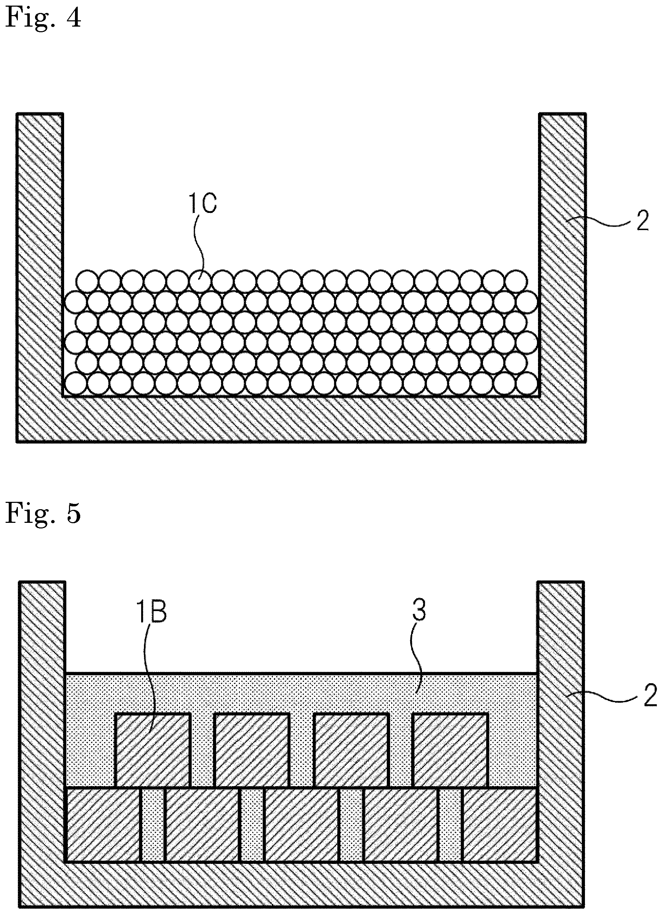

Instead of filling the raw material powder as it is into a heat-resistant vessel, the raw material powder is housed in a reaction vessel as a molded body, which can suppress the scattering of the raw material powder. As a result, it is possible to suppress the working environment from deteriorating due to the occurrence of powder scattering. Examples of the reaction vessel include a reaction vessel made of graphite. In addition, since the density of the molded body hardly changes due to a change in the pressure inside the reaction device when the inside of the reaction device is subjected to gas replacement from air to nitrogen gas, the occurrence of cracks in the raw material powder can be suppressed. The method of housing the molded body in the reaction vessel is not particularly limited as long as the molded body can be housed in the reaction vessel in a somewhat dense manner. For example, as shown in Fig. 1, one plate-shaped molded body 1A may be housed in a reaction vessel 2. Further, as shown in Fig. 2, a molded body 1B may be housed in the reaction vessel 2 in a state in which a plurality of cylindrical shaped molded bodies 1B are stacked without being brought into contact with the molded bodies 1B adjacent in the left-right direction. Further, as shown in Fig. 3(a), the molded bodies 1B housed in the reaction vessel may be stacked flat in a state where the molded bodies 1B adjacent to each other in the left-right direction are in contact with each other. Further, as shown in Fig. 3(b), in stacking a plurality of cylindrical shaped molded bodies 1B, the molded bodies 1B may be stacked above the molded bodies 1B so as to overlap only one molded body 1B while being in contact with the molded bodies 1B adjacent to each other in the left-right direction. Furthermore, as shown in Fig. 3(c), the molded bodies 1B may be stacked above the molded bodies 1B so as to overlap the two molded bodies 1B while being in contact with the molded bodies 1B adjacent to each other in the left-right direction. Further, as shown in Fig. 4, the molded bodies 1C may be housed in the reaction vessel 2 in a state in which a plurality of spherical shaped molded bodies 1C are filled.

When a plurality of molded bodies of the raw material powder are housed in the heat-resistant vessel, it is preferable that the distance between the molded body and another molded body positioned closest thereto is within a 10 mm, and more preferably within a 5 mm, and it is still more preferable that the plurality of molded bodies are housed in the reaction vessel in contact with each other. Accordingly, the nitriding combustion heat can be easily propagated between the adjacent molded bodies.

In a case where two adjacent molded bodies are in contact with each other, from the viewpoint of more reliably propagating the nitriding combustion heat between the molded bodies, the two adjacent molded bodies are preferably in point contact with each other, more preferably in line contact with each other, and still more preferably in surface contact with each other. Further, the molded body may be in surface contact with an adjacent molded body and may be in surface contact with another adjacent molded body. Further, when two adjacent molded bodies are in surface contact with each other, the contact area between the two adjacent molded bodies (contact area between the molded bodies) is preferably 1 $cm^2$ or more, and more preferably 2 $cm^2$ or more. The contact area between the two adjacent molded bodies is an average value, and can be calculated from the total number of points of contact between the molded bodies and the total area of contact between the molded bodies.

As shown in Fig. 5, a heat insulating layer 3 having nitrogen permeability and made of a material inert to a nitriding reaction may be formed in close contact with an upper surface of the molded body 1B of the raw material powder housed in the reaction vessel 2. Thus, the diffusion of the nitriding combustion heat from above the molded body can be suppressed, and the temperature of the molded body present above among the molded bodies housed in the reaction vessel can be suppressed from lowering to a temperature insufficient for the molded body to react with nitrogen gas. In addition, it is possible to suppress the remaining of unreacted material.

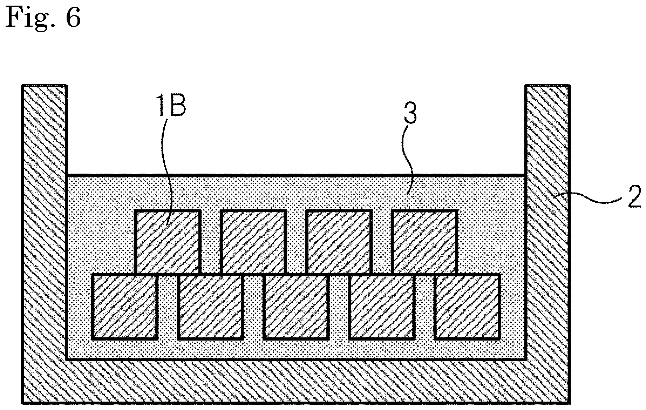

The heat insulating layer 3 can be formed of, for example, a powder of a nitride of the same metal element as the metal powder in the molded body. For example, when the metal powder in the molded body is a silicon powder, the heat insulating layer is preferably a silicon nitride powder. The heat insulating layer formed from the silicon nitride powder has nitrogen permeability and is inert to the nitriding reaction. As the heat insulating layer, a graphite fiber, a porous ceramic plate, or the like may be used. In the case where the heat insulating layer is made of a metal nitride powder, powder scattering slightly occurs, but the occurrence of powder scattering is suppressed as compared with the case where the raw material powder is filled into the reaction vessel without being molded. Further, as shown in Fig. 6, the heat insulating layer 3 having nitrogen permeability and made of a material inert to a nitriding reaction may be formed not only above the molded body 1B but also below and on the side thereof. Thus, deterioration of the reaction vessel can be prevented, and reaction between the molded body and the reaction vessel can be suppressed. For example, when the molded body is in contact with the reaction vessel, in the case where the reaction vessel is made of graphite, a metal carbide may be formed on the contact surface of the molded body with respect to the reaction vessel. However, in the aspect as shown in Fig. 6, the formation of the metal carbide can be prevented.

(Synthesis of Metal Nitride)

In the method for producing a nitride of the present invention, a metal nitride is synthesized by igniting a raw material powder containing a metal powder housed in a reaction vessel under a nitrogen atmosphere and propagating nitriding combustion heat of the metal powder to the whole of the housed raw material powder.

In the combustion synthesis reaction, an ignition agent containing powder of Ti, Al, or the like may be disposed in a portion serving as an ignition point. For example, a part of the molded body may be hollowed out to form a recess, and the ignition agent may be disposed in the recess. The amount of the ignition agent to be disposed in the molded body should be small enough not to affect the sinterability of the obtained metal nitride. In the case where the ignition agent is disposed, the ignition agent can be disposed at one or a plurality of sites at an end portion, a central portion, or an arbitrary position of the molded body.

After the molded body is housed in the reaction vessel, the inside of the reaction vessel is replaced with nitrogen, and the molded body is ignited under a nitrogen atmosphere. In general, the reaction vessel is placed in a pressure-resistant closed reactor having an ignition device and a gas supply/discharge mechanism, the pressure in the heat-resistant reactor is reduced to remove air, and then nitrogen gas is supplied to replace the air with nitrogen.

In the present invention, the reaction may be carried out under ordinary pressure or under applied pressure, but is preferably carried out under applied pressure. In particular, when a reaction for obtaining silicon nitride as a metal nitride is carried out, the reaction is preferably carried out under applied pressure from the viewpoint of facilitating the progress of the nitriding reaction. To be more specific, the reaction is preferably carried out at a pressure of from ordinary pressure to 1 MPa, which is achieved by the nitrogen pressure supplied to the closed reactor.

When the pressure of the closed reactor is lower than the above range, there is a tendency that the amount of unreacted materials increases due to misfire or the like during the reaction, and the yield decreases. On the other hand, when the pressure of the closed reactor is higher than the above range, there is a tendency that the reaction temperature excessively rises to produce coarse silicon massive materials, or the finally obtained silicon nitride powder contains a large amount of coarse particles which are difficult to pulverize, and it becomes difficult to secure an appropriate particle size distribution.

In the present invention, it is preferable that the metal powder is directly reacted by self-combustion diffusion in a nitrogen-pressurized state in which the molded body is ignited, that is, under a nitrogen atmosphere of from ordinary pressure to 1 MPa.

The ignition can be performed by a conventionally known method, and for example, ignition by arc discharge using a pair of electrodes attached to a closed reactor, ignition by electrically heating a carbon or metal heater, ignition by laser irradiation, or the like can be adopted.

When ignition is performed as described above, combustion of the molded body is diffused in a short time by self-combustion, and the molded body is heated to a reaction temperature of, for example, 1500 to 2000°C, and a metal nitride is obtained by a combustion synthesis reaction by a direct reaction between a metal powder and nitrogen. The resulting metal nitride is typically a massive product (i.e., a massive material of metal nitride).

(Pulverization of Metal Nitride)

In the method for producing a metal nitride of the present invention, the metal nitride is preferably mechanically pulverized under dry conditions. In the present invention, a metal nitride is obtained by carrying out the combustion synthesis reaction as described above. As described above, the metal nitride obtained in this manner is usually in a massive form. Metal nitride particles having a small powder particle diameter and an appropriate particle size distribution can be obtained by mechanical pulverization of the massive metal nitride described below. Since the massive metal nitride is obtained from a molded body having a void ratio of 40% or more, it can be easily pulverized.

(Mechanical Pulverization)

In the present invention, a metal nitride powder having an appropriate particle size distribution can be obtained by mechanical pulverization of the massive metal nitride obtained by the above combustion synthesis reaction. The mechanical pulverization is preferably performed by a dry method. Wet pulverization using a liquid medium such as water is advantageous in obtaining a fine powder because the pulverization pressure is uniformly applied. However, wet pulverization has a problem of low productivity. In addition, the metal nitride and the liquid medium may react with each other to produce impurities, and thus it is necessary to remove the impurities by purification such as acid treatment after pulverization. In addition, since it is necessary to treat the acid-treated waste liquid in order not to increase the environmental load, the cost of pulverization is increased. Therefore, it is preferable that the massive metal nitride obtained by the above reaction of the present invention is pulverized by dry pulverization.

It is also possible to obtain a metal nitride powder having an appropriate particle size distribution by carrying out a plurality of pulverizations of the massive metal nitride under different pulverizing conditions, preparing a plurality of types of pulverized products having different particle size distributions, and appropriately mixing the pulverized products. It is also possible to obtain a metal nitride powder having an appropriate particle size distribution by introducing a classification step such as sieving.

Such dry pulverization is performed using a pulverizer such as a vibration mill, a bead mill, or an air flow grinder (jet mill) that causes objects to be pulverized to collide with each other. An obvious way to suppress heavy metal contamination during pulverization is to use a common material of metal nitride as grinding media. For example, air flow grinding using a jet mill is most preferable from the viewpoint of prevention of contamination because pulverization can be performed by collision between powders. In addition, even in a method using a vibration mill or a bead mill, there is no problem of contamination if balls made of metal nitride, which is a common material, are used as grinding media. At this time, since the grinding media are also worn out even though the amount thereof is very small, it is obvious that media with less contamination should be used.

With regard to the production of metal nitride balls for use as grinding media, since a method of obtaining a wear-resistant sintered body by using a metal nitride alone is costly, a method of mixing and sintering a sintering aid such as yttria, magnesia, or alumina can also be adopted in order to produce media at low cost. Selection of these sintering aids does not pose any problem as a method for producing a metal nitride powder for a sintered body as long as components acceptable for the target metal nitride powder are selected. When the metal nitride powder is pulverized by using a vibration mill or a bead mill in a dry method, it is preferable to add a small amount of an alcohol such as ethanol or isopropyl alcohol or water to pulverize the metal nitride powder. Since these components function as a pulverizing aid for promoting pulverization, the pulverization time can be shortened. The pulverizing aid is added in such an amount that the dry state of the pulverized product can be maintained. The amount of the pulverizing aid varies depending on the component thereof, but is preferably in the range of 0.1 to 2% by mass with respect to the metal nitride powder to be pulverized.

(Production of Metal Nitride Sintered Body)

Using the metal nitride powder obtained as described above, a metal nitride sintered body can be produced by a known method.

For example, when the metal nitride powder is a silicon nitride powder, the silicon nitride powder is mixed with a sintering aid such as yttria, magnesia, zirconia, or alumina, press-molded to form a molded body having a bulk density of 1.7 g/cm$^3$ or more, particularly 1.85 g/cm$^3$ or more, and still more preferably 1.95 g/cm$^3$ or more, and then fired to obtain a sintered body.

The press molding is typically uniaxial press molding, but a method of performing CIP (Cold Isostatic Pressing) molding after uniaxial press molding is preferably adopted.

The firing is performed under a nitrogen atmosphere at 1700 to 2000°C. The density of the sintered body depends on both the firing temperature and the firing time. For example, in the case of firing at 1700°C, the firing time is about 3 to 20 hours. Further, in the case of firing at a temperature of 1850°C or higher, if the firing time is too long, the density of the sintered body may decrease due to decomposition of the silicon nitride itself. In this case, decomposition of the silicon nitride sintered body can be suppressed by sintering in an atmosphere pressurized with nitrogen. Although the decomposition of silicon nitride can be suppressed as the nitrogen pressure is higher, a pressure of less than 1 MPa is preferably employed for economical reasons such as the pressure resistance performance of the apparatus.

In order to obtain a high-density sintered body having a relative density of 99% or more, it is preferable to perform firing in a pressurized nitrogen atmosphere at 1800°C or higher.

The metal nitride sintered body obtained as described above can be suitably used as a substrate material for heat dissipation or the like.

Examples

Hereinafter, the present invention will be described in more detail with reference to Examples, but the present invention is not limited to these Examples.

In the Examples, various physical properties were measured by the following methods.

(1) Presence or Absence of Powder scattering

The presence or absence of powder scattering was observed when a molded body made of the raw material powder of each Example or the raw material powder of each Comparative Example was filled into a reaction vessel.

A: No powder scattering was observed.
B: Powder scattering was observed.

(2) Nitride Recovery Rate

The mass of the massive silicon nitride before brushing was W1, and the mass of the massive silicon nitride after removing unreacted silicon by brushing was W2, and the nitride recovery rate was calculated from the following formula. Then, the nitride recovery rate was evaluated according to the following criteria. The brushing was performed until a black portion (unreacted silicon) was not seen on the surface of the massive silicon nitride by visual observation.

$$\text{Nitride recovery rate } (\%) = W2/W1 \times 100$$

A: Nitride recovery rate is 95% or more
B: Nitride recovery rate is less than 95%

(3) Particle Diameter of Silicon Nitride Powder

(Pretreatment of Sample)

As a pretreatment of a sample silicon nitride powder, the silicon nitride powder was subjected to a firing treatment in air at a temperature of about 500°C for 2 hours. In the above-mentioned firing treatment, in the particle diameter measurement, the surface oxygen amount of the silicon nitride powder may be small, or the particle surface may be covered with a hydrophobic substance by a pulverizing aid or the like at the time of pulverization, and the particle itself may exhibit hydrophobicity. In such a case, dispersion in water may be insufficient, and it may be difficult to measure the particle diameter with reproducibility. Therefore, by subjecting the sample silicon nitride powder to a firing treatment in air at a temperature of about 200°C to 500°C for several hours, hydrophilicity is imparted to the silicon nitride powder, the silicon nitride powder is easily dispersed in an aqueous solvent, and particle diameter measurement with high reproducibility becomes possible. In this case, it has been confirmed that the particle diameter to be measured is hardly affected even if the firing is performed in air.

(Measurement of Particle Diameter)

In a beaker (inner diameter 60 mmφ, height 70 mm) having a marked line of 100 mL at the maximum, 90 mL of water and 5 mL of sodium pyrophosphate having a concentration of 5% by mass were added, and the mixture was stirred well. Then, a sample silicon nitride powder of about one ear pick was charged, and the silicon nitride powder was dispersed by an ultrasonic homogenizer (US-300E manufactured by NIHONSEIKI KAISHA LTD., chip size 26 mm) at 50% AMPLITUDE (about 2 amperes) for 2 minutes.

The dispersion was carried out by inserting the tip of the chip to the position of the marked line of 20 mL of the beaker.

Next, the particle size distribution of the obtained silicon nitride powder dispersion was measured using a laser diffraction/scattering particle size distribution analyzer (Microtrac MT3300EXII manufactured by MicrotracBEL Corporation). As measurement conditions, water (refractive index: 1.33) was selected as a solvent, a refractive index of 2.01 was selected as particle characteristics, permeation was selected as particle permeability, and a non-spherical shape was selected as a particle shape. The particle diameter at which the cumulative curve of the particle size distribution measured by the above-mentioned particle size distribution measurement becomes 50% is defined as an average particle diameter.

(4) Void Ratio of Molded Body

The density of each molded body was measured using an automatic gravimeter (DMA-220H type, manufactured by Shinko Denshi Co., Ltd.), and the average value of 15 pieces was shown as the density (D 1) of the molded body.

The theoretical density (D2) of the molded body was calculated from the density of silicon, the density of silicon nitride and the ratio of silicon and silicon nitride in the raw material powder. Then, the void ratio was calculated from the following formula.

$$\text{Void ratio (R) (\%)} = (1 - D1/D2) \times 100$$

(5) Bulk Density

The density (D1) of the molded body was defined as the bulk density of the molded body.

(6) β Phase Ratio

Powder X-ray diffraction (XRD) measurement using CuKα radiation was performed, and the weight ratio of the α phase and the β phase of the silicon nitride powder was calculated by the method described in C. P. Gazzara and D. R. Messier: Ceram. Bull., 56 (1977), 777-780.

(7) BET Specific Surface Area

The specific surface area of the produced silicon nitride powder was measured using a BET method specific surface area measurement apparatus (Macsorb HM model-1201), manufactured by Mountech Co., Ltd., and using a single point BET method by nitrogen gas adsorption.

Prior to the measurement of the specific surface area described above, the silicon nitride powder to be measured was subjected to heat treatment in air at 600°C for 30 minutes in advance to remove organic substances adsorbed on the powder surface.

(8) Content of Aluminum Element and Iron Element

The impurity concentration in the silicon powder was measured as follows. Silicon powder to be subjected to combustion synthesis reaction was weighed into a resin container, and high-purity concentrated nitric acid having a concentration of 70% was added thereto. After the silicon powder was completely dissolved by dropping high-purity hydrofluoric acid having a concentration of 50% while taking care not to excessively increase the decomposition reaction, the mixed acid of nitric acid and hydrofluoric acid remaining in the resin container was completely evaporated on a hot plate, and the heavy metal component adsorbed on the inner surface of the resin container was recovered with 1% dilute nitric acid. The resulting solution was subjected to inductively coupled plasma atomic emission spectrophotometer (ICP-AES) to quantify the heavy metal component. Here, iCAP 6500 DUO (manufactured by Thermo Fisher Scientific K.K.) was used.

The impurity concentration in the silicon nitride powder was measured using the method specified in JIS R 1603:2007.

(9) Preparation of Sintered Body

To 100 parts by mass of the sample silicon nitride powder, 5 parts by mass of yttria powder as a main sintering aid and 2 parts by mass of alumina powder or magnesia powder as an auxiliary sintering aid were added, and the mixture was thoroughly mixed in ethanol using a planetary ball mill. The silicon nitride powder thus mixed with the sintering aids was sufficiently dried, and then about 20 g was uniaxially press-molded at a pressure of 0.2 ton/cm$^2$ to form 15 pieces of a disk-shaped molded body having a diameter of 50 mmφ, and then each piece was sealed in a soft rubber bag and put into water, and subjected to a CIP treatment such that a pressure of 2 ton/cm$^2$ was applied to the surface of the molded body.

A boron nitride powder for preventing adhesion was applied to the surface of the disk-shaped molded body subjected to the CIP treatment. Five molded bodies were stacked in a box-type setter made of boron nitride having a high sealing property, and fired at 1900°C for 5 hours in a 0.8 MPa nitrogen atmosphere to obtain a sintered body.

(10) Density of Sintered Body

The density of each sintered body was measured using an automatic gravimeter (DMA-220H type, manufactured by Shinko Denshi Co., Ltd.), and the average value of 15 pieces was shown as the density of the sintered body.

(11) Thermal Conductivity (W/m ·K) of Sintered Body

The thermal diffusivity of each sintered body was measured using a laser flash thermophysical property measuring instrument (manufactured by Kyoto Electronics Manufacturing Co., Ltd.: LFA-502 type). The thermal conductivity is obtained by multiplying the thermal diffusivity, the density of the sintered body, and the specific heat of the sintered body. A value of 0.68 (J/g ·K) was adopted as the specific heat of the silicon nitride sintered body.

Three pieces were arbitrarily extracted from the 15 pieces of sintered body prepared by the method of (9) above, and test pieces for laser flash thermophysical property measurement were cut out. The thermal conductivity was calculated from the density and thermal diffusivity of each of the three test pieces, and the average value of the thermal conductivity of the three test pieces was shown as the thermal conductivity of the sintered body.

(12) Three-Point Bending Strength (MPa) of Sintered Body

Of the 15 pieces prepared by the method of (9) above, 10 pieces were arbitrarily extracted from the 12 pieces excluding the 3 pieces used for the thermal conductivity measurement, and a test piece for three-point bending strength measurement was cut out. The three-point bending strength of each of the 10 test pieces was measured by a method according to JIS R 1601:2008. At this time, a test jig having an inter-fulcrum distance of 30 mm was used. The average value of the three-point bending strength of the 10 test pieces was shown as the three-point bending strength of the sintered body.

In the following experiments, the following raw material powders were used.

(Silicon powder)

100% by mass of a silicon powder obtained by pulverizing high-purity polycrystalline silicon of a solar cell application class to an average particle diameter of about 5 μm using an air flow grinder (jet mill) lined with silicon nitride was used as raw material powder A. The oxygen amount of the obtained silicon powder was about 0.3% by mass. In addition, as the amounts of impurities, Fe was 10 ppm and Al was 5 ppm.

(Silicon nitride powder (diluent))

A silicon nitride powder having an average particle diameter of 1 pm was used.

<Example 1>

8 kg of a silicon powder and 2 kg of a silicon nitride powder were mixed to prepare a raw material powder. Using a commercially available powder molding die, the prepared raw material powder was pressure-molded to produce a molded body. To be specific, a powder molding die having an inner size of 50 mmφ was used, and about 30 g of the raw material powder was filled in the powder molding die, and then compressed from the upper surface at the pressure of about 60 kg/cm$^2$. Thereafter, a cylindrical molded body having an inner size of 50 mmφ and a height of about 15 mm was taken out from the cylindrical vessel. A plurality of molded bodies were produced in the same manner. Then, as shown in Fig. 3(a), the molded bodies were arranged in a reaction vessel in a flat stack.

In the reaction vessel, a heat insulating layer was formed by using the silicon nitride powder so as to fill a gap between the arranged molded bodies and so as to cover the upper surface of the molded bodies with a thickness of 30 mm.

After the molded body was housed in the reaction vessel as described above, the reaction vessel was placed in a pressure-resistant closed reactor having an ignition device and a gas supply/discharge mechanism, and the pressure in the reactor was reduced to perform deaeration, and then nitrogen gas was supplied to perform nitrogen substitution. Thereafter, nitrogen gas was gradually supplied to raise the pressure to 0.7 MPa.

Thereafter, an end portion of one of the molded bodies in the reaction vessel was ignited, and a combustion synthesis reaction was performed to obtain a massive silicon nitride. Thereafter, unreacted silicon was removed from the massive silicon nitride by brushing the surface of the massive silicon nitride to scrape off the black unreacted silicon. Then, the massive silicon nitride was crushed to about 5 to 20 pm by rubbing each other, and an appropriate amount was put into a vibration mill to perform fine pulverization for 7 hours. As the fine pulverizer and fine pulverizing method, conventional apparatuses and methods were used, but as a measure for preventing heavy metal contamination, urethane lining was applied to the inside of the pulverizer, and balls containing silicon nitride as a main agent were used as the grinding media. Immediately before the start of fine pulverization, 1% by mass of ethanol was added as a pulverizing aid, and fine pulverization was performed in a closed state of the pulverizer. As a result, a substantially β-type 100% silicon nitride powder having characteristics of an average particle diameter of 0.7 pm and a specific surface area of 16 $m^2$/g was obtained.

The reaction conditions, the physical properties of the obtained silicon nitride powder and the like are shown in Table 1.

[Sintered Body 1]

To 100 parts by mass of the silicon nitride powder obtained by the above-mentioned method, 5 parts by mass of yttria as a main sintering aid and 2 parts by mass of magnesia as an auxiliary sintering aid were added and mixed in a planetary ball mill, and then subjected to the above-mentioned uniaxial press molding and CIP molding, followed by firing at 1900°C for 5 hours under a nitrogen atmosphere of 0.8 MPa.

The obtained sintered body had a density of 3.25 g/$cm^3$, a heat conductivity of 90 W/m ·K, and a three-point bending strength of 750 MPa.

The sintered body of the silicon nitride powder had a high density and was very dense. The characteristics of thermal conductivity and bending strength were also excellent.

<Example 2>

In the production method of the silicon nitride powder of Example 1, a combustion synthesis reaction was carried out by setting the void ratio of the molded body to a lower value as shown in Table 1 to obtain a massive silicon nitride. The obtained massive silicon nitride was crushed and finely pulverized under the same conditions as in Example 1. As a result, a substantially β-type 100% silicon nitride powder having the characteristics as shown in Table 1 was obtained.

[Sintered body 2]

Using the above silicon nitride powder, a sintered body was prepared under the same conditions as for the sintered body 1 of Example 1. The characteristics of the sintered body were as excellent as those of the sintered body 1.

<Example 3>

In the production method of the silicon nitride powder of Example 1, a combustion synthesis reaction was carried out by setting the void ratio of the molded body to a relatively high value as shown in Table 1, and a silicon nitride powder was synthesized by the same method as in Example 1 while lowering the pressure during the reaction. As a result, the obtained silicon nitride powder was β-type silicon nitride containing about 5% of α-type. The characteristics of the obtained silicon nitride powder are shown in Table 1.

[Sintered body 3]

Using the above silicon nitride powder containing α-type, a sintered body was prepared under the same conditions as for the sintered body 1 of Example 1. The characteristics of the sintered body were as excellent as those of the sintered body 1.

<Example 4>

A silicon nitride powder was obtained in the same manner as in Example 1, except that only the fine pulverization time was shortened to 5 hours in the production method of the silicon nitride powder shown in Example 1. The characteristics of the obtained silicon nitride powder are shown in Table 1.

[Sintered body 4]

Using the silicon nitride powder obtained by the above method, a sintered body was prepared under the same conditions as for the sintered body 1 of Example 1. The characteristics of the sintered body were as excellent as those of the sintered body 1.

<Example 5>

A silicon nitride powder was obtained in the same manner as in Example 1, except that the fine pulverization time was extended to 10 hours in the production method of the silicon nitride powder shown in Example 1. The characteristics of the obtained silicon nitride powder are shown in Table 1.

[Sintered body 5]

Using the silicon nitride powder obtained by the above method, a sintered body was prepared under the same conditions as for the sintered body 1 of Example 1. The characteristics of the sintered body were as excellent as those of the sintered body 1.

<Example 6>

A combustion synthesis reaction and a pulverization method were carried out in the same manner as in Example 1, except that the proportions of the silicon powder and the silicon nitride powder in the raw material powder were changed. The characteristics of the obtained silicon nitride powder are shown in Table 1.

[Sintered body 6]

Using the silicon nitride powder obtained by the above method, a sintered body was prepared under the same conditions as for the sintered body 1 of Example 1. The characteristics of the sintered body were as excellent as those of the sintered body 1.

<Comparative Example 1>

A combustion synthesis reaction and a pulverization method were carried out in the same manner as in Example 1, except that the raw material powder was filled into the reaction vessel as it was without molding. The characteristics of the obtained silicon nitride powder are shown in Table 1.

[Sintered body 7]

Using the above silicon nitride powder, a sintered body was prepared under the same conditions as for the sintered body 1 of Example 1. The characteristics of the sintered body were as excellent as those of the sintered body 1.

<Comparative Example 2>

A combustion synthesis reaction and a pulverization method were carried out in the same manner as in Example 4, except that the raw material powder was filled into the reaction vessel as it was without molding. The characteristics of the obtained silicon nitride powder are shown in Table 1.

[Sintered body 8]

Using the above silicon nitride powder, a sintered body was prepared under the same conditions as for the sintered body 4 of Example 4. The characteristics of the sintered body were as excellent as those of the sintered body 1.

<Comparative Example 3>

A combustion synthesis reaction and a pulverization method were carried out in the same manner as in Example 5, except that the raw material powder was filled into the reaction vessel as it was without molding. The characteristics of the obtained silicon nitride powder are shown in Table 1.

[Sintered body 9]

Using the above silicon nitride powder, a sintered body was prepared under the same conditions as for the sintered body 5 of Example 5. The characteristics of the sintered body were as excellent as those of the sintered body 1.

<Comparative Example 4>

A combustion synthesis reaction and a pulverization method were carried out in the same manner as in Example 6, except that the raw material powder was filled into the reaction vessel as it was without molding. The characteristics of the obtained silicon nitride powder are shown in Table 1.

[Sintered body 10]

Using the above silicon nitride powder, a sintered body was prepared under the same conditions as for the sintered body 6 of Example 6. The characteristics of the sintered body were the same as those of the sintered body 1.

Table 1

| | Raw material powder | | Molded body | | Reaction condition | Pulverization condition | Silicon nitride powder | | | | | Evaluation | |
|---|---|---|---|---|---|---|---|---|---|---|---|---|---|
| | Silicon | Silicon nitride (diluent) | Void ratio | Bulk density | Reaction pressure | Pulverization time | Average particle diameter | Specific surface area | $\beta$ phase ratio | Impurity concentration | | powder scattering | Nitride recovery rate |
| | | | | | | | | | | Fe | Al | | |
| | part by mass | part by mass | % | g/cm3 | MPa | hour | $\mu$m | m$^2$/g | % | ppm | ppm | | |
| Ex. 1 | 100 | 25 | 59 | 1.02 | 0.7 | 7 | 0.7 | 16 | 100 | 100 | 100 | A | A |
| Ex. 2 | 100 | 25 | 44 | 1.40 | 0.2 | 7 | 0.7 | 16 | 100 | 100 | 100 | A | A |
| Ex. 3 | 100 | 25 | 68 | 0.80 | 0.2 | 7 | 0.7 | 16 | 95 | 100 | 100 | A | A |
| Ex. 4 | 100 | 25 | 59 | 1.02 | 0.7 | 5 | 0.8 | 12 | 100 | 100 | 80 | A | A |
| Ex. 5 | 100 | 25 | 59 | 1.02 | 0.7 | 10 | 0.6 | 19 | 100 | 100 | 120 | A | A |
| Ex. 6 | 100 | 6.25 | 65 | 0.83 | 0.3 | 7 | 0.7 | 16 | 95 | 100 | 100 | A | A |
| Comp. Ex. 1 | 100 | 25 | - | - | 0.7 | 7 | 0.7 | 16 | 100 | 100 | 80 | B | B |
| Comp. Ex. 2 | 100 | 25 | - | - | 0.7 | 5 | 0.8 | 12 | 100 | 100 | 80 | B | B |
| Comp. Ex. 3 | 100 | 25 | - | - | 0.7 | 10 | 0.6 | 19 | 100 | 100 | 120 | B | B |
| Comp. Ex. 4 | 100 | 6.25 | - | - | 0.3 | 7 | 0.7 | 16 | 95 | 100 | 100 | B | B |

<Comparative Example 5>

In the production method of the silicon nitride powder of Example 1, the combustion synthesis reaction was carried out with the void ratio of the molded body set to a value of 30%. In this case, the combustion reaction did not proceed sufficiently, and misfires occurred during the reaction, resulting in an increase in the amount of unreacted materials.

<Comparative Example 6>

In the production method of the silicon nitride powder of Example 1, the void ratio of the molded body was set to a value of 80%. In this case, the molded body was brittle, the handling property was poor, and it was difficult to install it in the reaction vessel.

It was found that by using a raw material obtained by molding a powder raw material so as to have a predetermined void ratio, powder scattering can be suppressed and the recovery rate of nitride can be improved. In addition, it was found that an excellent sintered body can be obtained even when a molded raw material is used as in the case of using a non-molded raw material. On the surface of the massive silicon nitride produced using the non-molded raw material, mainly streaky black unreacted silicon remained. From this streaky shape, it is considered that the remaining unreacted silicon is caused by cracks generated in the filled raw material powder. Since the cracks reached a deep position from the surface of the raw material powder, it is considered that in the massive silicon nitride produced using the non-molded raw material, unreacted silicon remained from the surface of the massive silicon nitride to a deep position. In addition, since the unreacted silicon could not be removed from the massive silicon nitride unless the surface of the massive silicon nitride was considerably abraded by brushing, it is considered that the recovery rate of nitride was low in the massive silicon nitride produced by using the non-molded raw material.

Further, by forming a heat insulating layer around the molded raw material, it was possible to reduce the amount of unreacted materials to 10% or less, and in some cases to 5% or less.

Reference Signs List

1A, 1B, 1C: Molded body
2: Heat-resistant vessel
3: Heat insulating layer

**Claims**

1. A method for producing a metal nitride by igniting a raw material powder containing a metal powder housed in a reaction vessel under a nitrogen atmosphere and propagating nitriding combustion heat of the metal powder to the whole of the housed raw material powder to synthesize the metal nitride, the method comprising housing the raw material powder in the reaction vessel as a molded body having a void ratio of 40 to 70%.

2. The method for producing a metal nitride according to claim 1, wherein the raw material powder contains 0 to 80 parts by mass of a metal nitride powder with respect to 100 parts by mass of the metal powder.

3. The method for producing a metal nitride according to claim 1 or 2, wherein a plurality of molded bodies of the raw material powder are brought into contact with each other and housed in the reaction vessel.

4. The method for producing a metal nitride according to any one of claims 1 to 3, wherein a heat insulating layer having nitrogen permeability and made of a material inert to a nitriding reaction is formed in close contact with an upper surface of the molded body of the raw material powder housed in the reaction vessel.

5. The method for producing a metal nitride according to any one of claims 1 to 4, wherein the metal is silicon.

Fig. 1

1A

2

Fig. 2

1B

2

# Fig. 3

(a)

1B

(b)

1B

(c)

1B

Fig. 4

Fig. 5

Fig. 6

## INTERNATIONAL SEARCH REPORT

International application No.

PCT/JP2020/044936

### A. CLASSIFICATION OF SUBJECT MATTER
C01B 21/06(2006.01)i; C01B 21/064(2006.01)i; C01B 21/068(2006.01)i; C01B 21/072(2006.01)i
FI: C01B21/06 N; C01B21/064 D; C01B21/068 D; C01B21/072 B

According to International Patent Classification (IPC) or to both national classification and IPC

### B. FIELDS SEARCHED

Minimum documentation searched (classification system followed by classification symbols)
C01B21/06; C01B21/064; C01B21/068; C01B21/072

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 56-27441 B1 (FIRIARU INSUTITUTA HIMICHESUKOI FUIJIKI AKADEMII NAUKU ESU ESU ESU ERU) 25 June 1981 (1981-06-25) column 5, line 7 to column 7, line 26, examples 8-14, claims | 1-3<br>1-5 |
| X<br>Y | JP 4-124007 A (TOKYO INSTITUTE OF TECHNOLOGY) 24 April 1992 (1992-04-24) claims, page 1, right column, the bottom line to page 2, upper left column, line 6, page 2, lower right column, lines 3-4, examples | 1-3<br>1-5 |
| Y | JP 62-162608 A (KOIZUMI, Mitsue) 18 July 1987 (1987-07-18) claims, examples | 1-5 |
| Y | JP 2011-162431 A (NATIONAL CHENG KUNG UNIVERSITY) 25 August 2011 (2011-08-25) paragraphs [0063], [0068], [0069] | 4 |
| A | US 5453407 A (NATIONAL SCIENCE COUNCIL) 26 September 1995 (1995-09-26) entire text | 1-5 |

☒ Further documents are listed in the continuation of Box C.   ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 January 2021 (12.01.2021) | 26 January 2021 (26.01.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

International application No.

PCT/JP2020/044936

C (Continuation). DOCUMENTS CONSIDERED TO BE RELEVANT

| Category* | Citation of document, with indication, where appropriate, of the relevant passages | Relevant to claim No. |
|---|---|---|
| P, A | JP 2020-111477 A (COMBUSTION SYNTHESIS CO., LTD.) 27 July 2020 (2020-07-27) entire text | 1-5 |

Form PCT/ISA/210 (continuation of second sheet) (January 2015)

# EP 4 071 110 A1

INTERNATIONAL SEARCH REPORT
Information on patent family members

| International application No. |
| --- |
| PCT/JP2020/044936 |

| Patent Documents referred in the Report | Publication Date | Patent Family | Publication Date |
| --- | --- | --- | --- |
| JP 56-27441 B1 | 25 Jun. 1981 | (Family: none) | |
| JP 4-124007 A | 24 Apr. 1992 | (Family: none) | |
| JP 62-162608 A | 18 Jul. 1987 | (Family: none) | |
| JP 2011-162431 A | 25 Aug. 2011 | TW 201127747 A | |
| US 5453407 A | 26 Sep. 1995 | (Family: none) | |
| JP 2020-111477 A | 27 Jul. 2020 | (Family: none) | |

Form PCT/ISA/210 (patent family annex) (January 2015)

23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000264608 A

- WO 2018110565 A

**Non-patent literature cited in the description**

- **C. P. GAZZARA ; D. R. MESSIER.** *Ceram. Bull.,* 1977, vol. 56, 777-780